# EUROPEAN PATENT APPLICATION

(11) **EP 2 980 719 A1**
(43) Date of publication of application: **03.02.2016**
(21) Application number: 14306217.2
(22) Date of filing: 30.07.2014
(51) Int. Cl.: G06F 21/32, G06Q 20/40, G06K 19/07, H04W 12/06, G06K 9/00

(54) **Method for authenticating a user and corresponding first device and system**

(71) Applicant: Gemalto SA, 92190 Meudon (FR)
(72) Inventor: Rouchouze, Bruno, 13705 La Ciotat (FR)

(57) **Abstract**

The invention relates to a method 20 for authenticating a user 22.

According to the invention, the user has at least one fingerprint 10 that is marked, in an invisible manner, at at least one minutia. Each marked minutia 12, 14, 16, 18 or 110 is an invisible tattoo. The method comprises, during an enrolment phase, the following steps. A first device determines 210 at least one invisible tattoo on at least one fingerprint. The first device displays 212 or lets display the at least one determined invisible tattoo. A user selects 220 at least one displayed invisible tattoo. And the first device or a second device coupled or connected to the first device, as storing device, stores 226 at least one selected invisible tattoo, each stored invisible tattoo being one reference tattoo, the at least one stored invisible tattoo being registered as user authentication data to be matched.

The invention also relates to corresponding first device and system.

## Description

### Field of the invention:

The invention relates, in a general manner, to a method for authenticating a user. Moreover, the invention also pertains to a first device for authenticating a user.

### State of the art:

As known per se, a user enters a Personal Idenfication Number (or PIN) at a mobile phone by using a grid of boxes, so as to be authenticated by a Subscriber Identity Module (or SIM) type card that stores an expected PIN. Each box symbolizes a corresponding key on a touch screen. Each box presents a number comprised between zero and nine in a random manner while ensuring that all the numbers are present within the grid. The user depresses a box for each PIN number to be entered to dial the PIN, as user authentication data to be matched.

However, such a known solution presents a risk that a malicious person steals the PIN by simply observing each number touched on the grid and comprised within the entered PIN.

There is therefore a need to secure an entry of user authentication data.

### Summary of the invention:

The invention proposes a solution for satisfying the just herein above specified need by providing a method for authenticating a user.

According to the invention, the user has at least one fingerprint that is marked, in an invisible manner, at at least one minutia. Each marked minutia is an invisible tattoo. The method comprises, during an enrolment phase, the following steps. A first device determines at least one invisible tattoo on at least one fingerprint. The first device displays or lets display the at least one determined invisible tattoo. A user selects at least one displayed invisible tattoo. And the first device or a second device coupled or connected to the first device, as storing device, stores at least one selected invisible tattoo, each stored invisible tattoo being one reference tattoo, the at least one stored invisible tattoo being registered as user authentication data to be matched.

The principle of the invention consists in registering one or several user fingerprint minutiae, as user authentication data, that are chosen by the concerned user amongst one or several invisibly marked minutiae that are visually presented to the user.

There is no restriction about a technology(ies) used for marking, in an invisible manner, a set of one or several user fingerprint minutiae.

There is also no restriction about a shape of a mark(s) used for marking, in an invisible manner, each minutia. The mark may have any kind of shape.

The mark(s), as indicator(s), allow(s) identifying a presence and locating, in an easy, simple and stable manner, some minutia(e), as a particularity(ies) of the fingerprint(s).

The invisibly marked user fingerprint minutia(e), as an invisible tattoo(s), is(are) present, placed on the concerned fingerprint image(s) and visually presented to the user.

The visual presentation of the invisibly marked user fingerprint minutia(e) may be of any type.

The choice of the fingerprint minutia(e) is left to the concerned user, so as to register invisibly marked user fingerprint minutia(e), as user fingerprint feature(s).

The registered user fingerprint feature(s) is(are) personal and peculiar to the concerned user.

The chosen user fingerprint feature(s) that is(are) saved or registered is(are) to be used as user authentication data to be matched.

The user authentication data comprises a set of one or several invisibly marked minutiae, as invisible tattoos, that are present and placed on one or several user fingerprints. The invisible tattoo set that is kept is visually presented to the user and selected, as user authentication data, by the user.

The user fingerprint minutia(e) that is(are) chosen is(are) not easily accessible by a hacker since it(they) is(are) not visible to a human eye(s) and is(are) not public but specific to the concerned user.

Contrary to the known solution, instead of comprising a set of visible public numbers, the user authentication data comprises part or all of invisibly marked minutiae that are non public data, specific to the user and are complicated to be recognized by another individual, like a hacker. The user authentication data is thus difficult to be accessed for any individual that is distinct from the concerned user. The user authentication data being a composition of chosen and personal invisible user features is therefore more secure than the visible PIN including public numbers for its entry. The user authentication data being a set of one or several invisible tattoos is rather hidden to a hacker. Moreover, the invisible tattoos, as non public data, that are comprised within the registered user authentication data are far less predictable than a combination of limited public numbers, as a PIN.

The invention solution makes it possible to record, during a registration session, a personal set of one or several invisible tattoos, as user authentication data to be matched, that remain fixed and constant in the time.

According to another invention aspect, the invention is a first device for authenticating a user.

According to the invention, the user has at least one fingerprint that is marked, in an invisible manner, at at least one minutia. Each marked minutia is an invisible tattoo. The first device is configured, for an enrolment phase, to determine at least one invisible tattoo on at least one fingerprint, to display or let display the at least one determined invisible tattoo, and to store, further to a user selection of at least one displayed invisible tattoo, at least one selected invisible tattoo, each stored invisible tattoo being one reference tattoo, the at least one stored invisible tattoo being registered as user authentication data to be matched.

As device, it may be of any type, like e.g. a terminal, a Secure Element (or SE), a local server or a remote server.

According to still another invention aspect, the invention is a system for authenticating a user.

According to the invention, the system comprises a first device and a second device. The second device is coupled or connected to the first device. The user has at least one fingerprint that is marked, in an invisible manner, at at least one minutia. Each marked minutia is an invisible tattoo. The first device is configured, for an enrolment phase, to determine at least one invisible tattoo on at least one fingerprint, to display or let display the at least one determined invisible tattoo, and to send to the second device, further to a user selection of at least one displayed invisible tattoo, at least one selected invisible tattoo. And the second device is configured, for an enrolment phase, to receive from the first device, the at least one selected invisible tattoo, and to store at least one selected invisible tattoo, each stored invisible tattoo being one reference tattoo, the at least one stored invisible tattoo being registered as user authentication data to be matched.

As system, it may be of any type, like e.g. a terminal in cooperation with an SE, a local server or a remote server.

### Brief description of the drawings:

Additional features and advantages of the invention will be apparent after a reading of a detailed description of one preferred embodiment of the invention, given as an indicative and non-limitative example, in conjunction with the attached drawings:
- Figure 1 illustrates an enlarged view of a fingerprint including a visual presentation of invisible (biometric) tattoos to be used for a user authentication, according to the invention; and
- Figure 2 represents a flow chart relating to a user selection of visually presented invisible tattoos to be used for either registering user authentication data or submitting data to be compared to registered user authentication data to be matched, according to the invention.

### Detailed description:

Herein under is considered a case in which the invention method for authenticating a user is implemented by a mobile equipment, as a system for authenticating a user, including a mobile (tele)phone that includes or is connected or coupled to a chip.

According to another embodiment (not represented), the invention method for authenticating a user is implemented by a mobile phone in cooperation with a local or remote server, as a system for authenticating a user. The mobile phone is connected, possibly through a mobile communication network(s) and/or an Internet type network, to the server. According to such an embodiment, the server is adapted to carry out the functions that are carried out by the chip and that are described infra.

According to still another embodiment (not represented), the invention method for authenticating a user is implemented by a mobile phone or an SE, as a standalone device for authenticating a user. In other words, the mobile phone or the SE does not cooperate with any external entity, like e.g. a chip or a server. According to such an embodiment, the device for authenticating a user is adapted to carry out the functions that are carried out by the mobile phone and the chip and that are described infra.

Naturally, the herein below described embodiment is only for exemplifying purposes and is not considered to reduce the scope of the invention.

It is assumed that a finger of an individual who is alive has undergone a print marking process as described e.g. in WO 2013/014101 A1, so as to identify the individual.

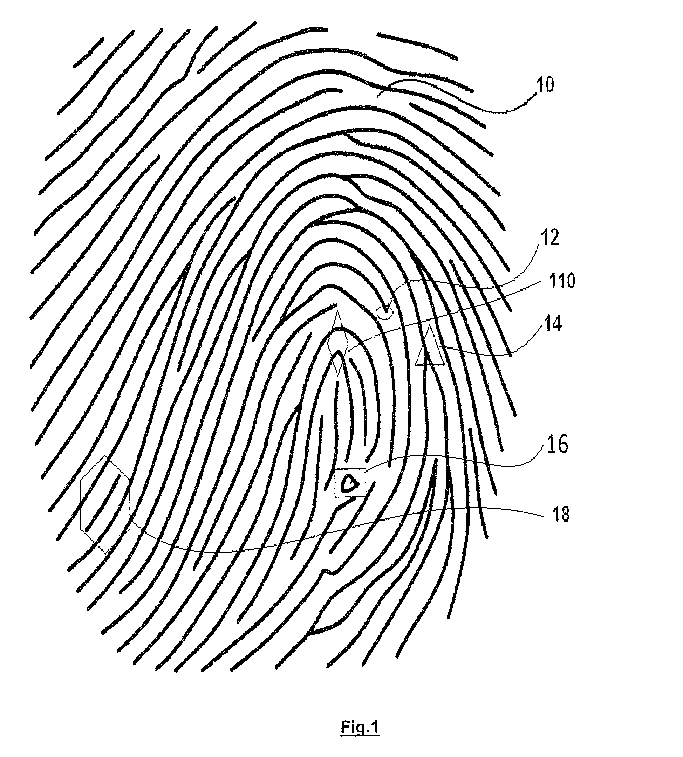

Figure 1 shows a fingerprint 10, as a result of the print marking process and a physical print or physiological characteristic that the individual has.

The physiological characteristic is related to a shape of an individual body.

The physiological characteristic may comprise, alternatively or additionally to a fingerprint(s), a palm vein(s), a face recognition, a palm print(s), a hand geometry, an iris recognition(s) to which the invention method for authenticating a user may be applied by using, instead of a fingerprint minutia(e), a particular physical characteristic(s) that is(are) invisibly marked as invisible tattoo(s).

A fingerprint, as particular physiological characteristic, may have one or several minutiae, as particular user fingerprint features.

A user owns one (or several) fingerprint(s) that is(are) marked at one or several minutiae in an invisible manner. Such a marking adds one or several prints, as indicators, at one or several characteristics of one or several fingerprints of the concerned user.

The technology(ies) that is(are) used for marking a user fingerprint minutia(e) may be of any type.

As one print marking technique, it uses e.g. an electromagnetic radiation that is invisible to the human eye. A print marking step consists of modifying an epidermis of the fingerprint by means of an electromagnetic radiation thanks to a laser or the like. For instance, the wavelength of the electromagnetic radiation is comprised either from around 10⁻³ m to around 10⁻⁶ m that corresponds to an infrared light or from around 10⁻⁷ m to around 10⁻⁸ m that corresponds to an ultraviolet light. The infrared and the ultraviolet lights are both invisible to the human eye.

According to another embodiment (not represented), instead of marking in a same way different kinds of minutiae, different marking techniques in terms of shapes and/or wavelengths of electromagnetic radiations are used for different kinds of minutiae.

As another print marking technique, it uses e.g. a deposit of material particle with the help of a needle or the like. A corresponding print marking step consists of affixing at least one ink particle or metal flake, as material particle, onto an epidermis, as a surface and an external layer of the fingerprint 10 and/or a dermis, as an internal layer situated immediately below the surface of the fingerprint 10.

As another print marking technique, it uses e.g. a deposit of one or several electronic components, such as one chip(s).

The marking allows identifying and locating, in an easy, simple and stable manner, some particularity(ies) of the (marked) fingerprint(s).

The marking renders unique and stable the (marked) minutia(e) to be extracted. The marking renders an extraction of the (marked) minutiae robust, i.e. constant with the time.

The marking facilitates thus an identification of the concerned individual.

Each mark is represented while being located, e.g., with a horizontal position on an axis x (not represented) and a vertical position on an axis y (not represented) where the axes x and y cross each other on the top of the fingerprint at its left side. The horizontal and vertical position values are each represented by, for instance, one byte.

The type of associated minutia may be further indicated by the type of the used mark. The used mark may depend on the used print marking technique.

The type of the used mark is represented by, for instance, one byte. A more precise mark may be used for representing a minutia, like e.g. an arrow oriented with a certain angle value with respect to the horizontal axis x. For instance, the type of the minutia is represented by 2 bits and the angle value by 6 bits.

Once marked, the invisible tattoo(s) do(es) not let any trace in a visible manner to a human eye on the concerned fingerprint(s). The invisible tattoo(s) is(are) therefore non public data.

The fingerprint minutiae may be of different natures.

The minutia(e) relating to a fingerprint(s) may include one or several ridge endings, one or several ridge bifurcations, one or several independent ridges (or termed short ridges), one or several ridge enclosures (or termed lakes), one or several ridge crossings, one or several spurs (or termed hooks), one or several bridges, one or several double bifurcations, one or several trifurcations, opposed bifurcations, one or several deltas, one or several cores and/or one or several dots.

The fingerprint minutiae are present, invisibly marked and presented visually to a device user.

The fingerprint 10 is one example of a fingerprint that has several invisibly marked tattoos that are possessed by an individual, as a mobile phone user, and visually presented to the user of a mobile phone.

A mobile equipment (not represented) includes a mobile phone (not represented), as a user terminal, and an embedded Universal Integrated Circuit Card (or eUICC), as an incorporated chip (not represented).

For the sake of simplicity, the mobile phone and the eUICC are termed herein after the phone and the chip respectively.

The phone includes one or several microprocessors, as data processing means, one or several memories, as data storing means, and one or several Input/Output (or I/O) interfaces, as communication means for exchanging data with the outside of the phone.

The phone microprocessor processes data originating from either an internal component or an external entity.

The phone memory may comprise one or several volatile memories and one and/or several non-volatile memories.

The phone memory stores data, like user data.

The phone memory stores an Operating System (or OS) and one or several applications to be executed by the phone microprocessor.

To allow the user to be authenticated, the phone supports an invention application for authenticating a user.

Instead of a phone, the device includes one or several microprocessors, as means for processing data, comprising and/or being connected to means for interfacing with a user, comprising communication means for exchanging data with outside, and comprising and/or being connected to one or several memories, as means for storing data. The device may be, for instance, a set-up box, a desktop computer, a laptop computer, a media-player, a game console, a tablet, a netbook, a Personal Digital Assistance (or PDA) or any other user terminal.

The phone is preferably coupled or connected to the chip.

The phone I/O interfaces include one or several I/O interfaces for exchanging data with the chip.

The chip is under control of the phone microprocessor.

Alternately, instead of being coupled to the chip, the phone memory(ies) stores data stored within the chip as described infra.

According to a particular embodiment, the chip is soldered to a Printed Circuit Board (or PCB) of the phone.

Alternatively, the phone I/O interface with the chip is an International Organization for Standardization (or ISO) 7816 type interface, as contact interface, when the chip is inserted, in a removable manner, within the phone.

Alternately, instead of a contact interface, the phone I/O interface with the chip is connected to or includes a CL interface.

The chip belongs to a user.

The chip is connected to the phone, as a chip host device.

The chip includes a microprocessor(s), as data processing means, a memory(ies), as data storing means, and one or several I/O interfaces that are internally all connected, through an internal bidirectional data bus, to each other.

The I/O interface(s) allow(s) communicating data from the internal chip components to the chip exterior and conversely.

The chip memory stores an OS.

The chip memory may include one or several EEPROMs (acronym for "Electrically Erasable Programmable Read-Only Memory"), one or several ROMs (for "Read Only Memory"), one or several Flash memories and/or any other memories of different types, like a RAM (for "Random Access Memory") type.

The chip memory may store user data, like a first name, a last name, a bank account number, a birth date, a private key, a Personal Identity Number, biometric data and/or other appropriate data.

The chip memory may store, for example, at least one banking type application needing to authenticate a carrier, as user of the phone/chip.

The chip microprocessor processes, controls and communicates internally data with all the other components incorporated within the chip and, through the I/O interface(s), with the chip exterior.

The chip microprocessor executes or runs one or several applications.

As application(s) supported by the chip, there is preferably an application for authenticating a user based on one or several invisible tattoos that have been previously stored within a chip memory during an enrolment phase. The user authentication application is stored preferably within the chip memory.

The chip microprocessor preferably executes security functions, in order to protect an access to information, like data stored and/or managed by or through the chip.

The security functions include preferably a user authentication application based on invisible tattoos and to be executed before accessing, in particular, data stored within the chip, the phone or another entity connected or coupled to the phone.

The chip microprocessor is preferably able to initiate actions, in order to interact directly with the outside world, in an independent manner of the phone, as a chip host device. Such a capacity of interaction at the initiative of the chip is also known as a proactive capacity. According to one particular embodiment, the chip is able to use a SIM ToolKit (or STK) type command, as a proactive command to be sent to the chip host device. The chip is thus able to send, at its (own) initiative, through its chip host device, to a phone user or any device connected to the chip host device data by using a proactive command for sending a message to the concerned user or device to be addressed, like a message for selecting a set of one or several invisible tattoos accompanied with data relating to detected invisible tattoos to be both displayed by the phone.

Instead of being embedded, the chip may be included within a smart card or another medium, as an SE, that is coupled or connected to the phone, as a chip host device. The chip may be either fixed to or removable from the chip host device.

The chip may be included within an SE.

The invention does not impose any constraint as to a kind of the SE type. As removable SE, it may be a SIM type card, a Secure Removable Module (or SRM), a smart dongle of the USB (acronym for "Universal Serial Bus") type, a (micro-)Secure Digital (or SD) type card or a Multi-Media type Card (or MMC) or any format card to be coupled to a host device.

The phone is configured, for an enrolment phase, to detect or determine one or several invisible tattoos on one or several fingerprints.

The phone is preferably equipped with one (or several) fingerprint sensor(s), as means for capturing a fingerprint. The fingerprint sensor captures one or several user fingerprints.

The phone is preferably equipped with one (or several) invisible mark (or tattoo) sensor(s) (or reader(s)), as means for detecting each invisible (biometric) tattoo that is present at a minutia on the concerned fingerprint. The invisible tattoo marking renders each concerned fingerprint, as biometric data, unique, stable and non alterable, namely a presence of any concerned minutia will be always detectable i.e. from one detection session to another detection session without suffering from any wear.

Alternately, instead of being incorporated within the phone, the fingerprint sensor and/or the invisible tattoo sensor is(are) embedded within an entity, like e.g. an SE, as a local accessory, that is connected or coupled to the phone.

Each invisible tattoo indicates a presence and a location of a minutia on the fingerprint 10. Each invisible tattoo is close to and/or surrounds the associated minutia.

The minutiae associated with corresponding invisible tattoos are by using the detected and represented tattoos easily identifiable and locatable in a sure, fixed and stable manner.

The invisible tattoo sensor does not need to touch a finger so as to detect, in a contactless manner (i.e. with no contact between the invisible tattoo sensor and the concerned finger), each invisible tattoo that exists on the fingerprint.

The invisible tattoo sensor is able to detect, permanently, each invisible tattoo present on the concerned fingerprint.

The invisible tattoo sensor detects preferably a location of each invisible tattoo present on the concerned fingerprint. Thus, if there are several invisible tattoos, then the phone user is able to distinguish visually one invisible tattoo from another invisible tattoo at least by their corresponding locations.

The phone has, as phone Man Machine Interface (or MMI), preferably a touch (sensitive) (display) screen.

The phone MMI allows a phone user to interact with the phone, the chip or a device external to the mobile equipment, like a remote server. Such a user interaction may be used notably for providing the phone, the chip or, through a mobile communication network(s) and/or a non-mobile communication network(s), the remote server, as external device, with user authentication based on invisible tattoo(s).

The touch screen displays preferably the detected invisible tattoo(s).

Alternately, instead of using a phone touch screen, the phone is connected or coupled to an external touch screen so that the phone lets the external screen display the detected invisible tattoo(s).

Such a display of the detected invisible tattoo(s) allows the phone user to see each detected invisible tattoo.

Each displayed invisible tattoo is placed and preferably located visually on a captured fingerprint image that is displayed, in a preferred manner, on one and the same touch screen than the one on which the invisible tattoos are displayed.

Alternatively, instead of overlaying the detected invisible tattoos and the captured fingerprint image(s), only each detected invisible tattoo is displayed while keeping preferably the corresponding detected location.

Each detected invisible tattoo is preferably visually represented by using graphical data.

According to a particular embodiment, each detected invisible tattoo is visually represented by using a predefined geometric figure, as graphical data. As geometric figures, there are e.g. a circle 12, a triangle 14, a square 16, an hexagon 18 and a diamond 110. Such a geometric figure set is not exhaustive and other geometric figure(s) may be used.

Alternately or additionally to geometric figures, other highlighting technology(ies) may be used for highlighting each detected invisible tattoo, like e.g. a coloration of used graphical data, a blinking of the used graphical data....

The visual presentation of each detected invisible tattoo may depend on the nature of the minutia.

The circle 12, the triangle 14, the square 16, the hexagon 18 and the diamond 110 are preferably each associated with a particular minutia type, namely a ridge ending, a ridge bifurcation, a ridge enclosure, an independent ridge and a core respectively.

Such a representation of the detected invisible tattoo(s) allows the user to better notice the concerned detected invisible tattoo(s). Likewise, the representation of the detected invisible tattoo(s) allows the user to better memorize each invisible tattoo that she or he may select to be comprised, as a reference tattoo, within user authentication data to be stored. The user authentication data to be matched and known to the concerned user is based on one or several invisible tattoos.

The touch screen allows preferably the phone user to touch with e.g. her or his finger (or a pen, as an accessory) each displayed invisible tattoo that she or he desires to select as being comprised within the user authentication data to be matched either during the enrolment phase or a user authentication session.

The phone is preferably arranged to send to the chip, further to a user selection of one or several displayed invisible tattoos, one or several selected invisible tattoos to be stored. The phone is preferably further arranged to send to the chip, further to a user selection of one or several displayed invisible tattoos, a command for requesting to write into the chip memory data along with one or several selected invisible tattoos to be stored.

Alternatively, instead of letting the phone store into the chip the selected invisible tattoos, the phone stores, further to a user selection of one or several displayed invisible tattoos, one or several selected invisible tattoos.

The chip is preferably adapted to receive from an external requesting entity, like e.g. the phone, an external terminal or a remote server, one or several selected invisible tattoos. The chip is preferably further adapted to receive from an external requesting entity, like e.g. the phone, an external terminal or a remote server a command for requesting to write into the chip memory data along with one or several selected invisible tattoos to be stored.

Once registered during the enrolment phase, each stored invisible tattoo is one reference tattoo. The stored invisible tattoo(s) is(are) registered as user authentication data to be matched.

The chip constitutes a tamper resistant component that protects physically access to the stored data. A storing of a result of a concatenation of the reference tattoo(s), as user authentication data to be matched, within a chip memory is therefore secure.

The phone user has to know and to memorize the user authentication data to be matched, so as to be recognized as the genuine user.

More exactly, the user has to know and therefore re-select the reference tattoo(s), i.e., in a preferred manner, by using the corresponding associated graphical representation(s), so that the chip (or the phone, or a remote server) that stores preferably the reference tattoo(s) authenticates successfully the concerned phone user.

To authenticate the user, the chip stores preferably an application for verifying personal biometric data based on the invisible tattoos that are stored, as reference tattoos and user authentication data to be matched, securely within the chip.

Alternately, instead of the chip, the phone stores an application for verifying personal biometric data based on the invisible tattoos that are stored, as reference tattoos and user authentication data to be matched, within the phone.

The chip (or the phone) is thus configured to verify whether proposed, i.e. selected, invisible tattoos does (or does not) match the (stored) user authentication data to authenticate (or not) the user. The chip, as reference tattoos safe, (or the phone) compares a proposed invisible tattoo(s) to the stored reference tattoo(s). Only if the proposed invisible tattoo(s) does match the stored reference tattoo(s), as user authentication data, then the chip (or the phone) authenticates the phone user.

When the user authentication is successful, the chip (or the phone) authorizes either an access to data or resources or a running of any application supported by the chip, the phone or an external entity connected or coupled to the phone or the chip.

Only the user who has and knows the right user invisible tattoos is able to be identified and authenticated.

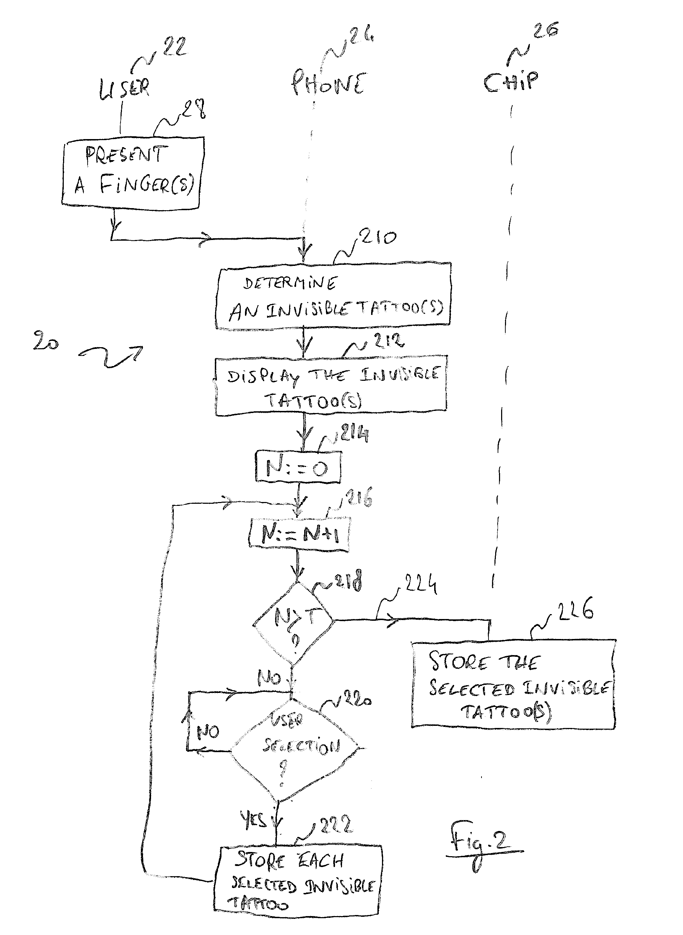

Figure 2 depicts an exemplary embodiment of a flow chart 20 that involves a phone user 22, the phone 24, as a user terminal, and the chip 26.

It is assumed that the phone 24 has been configured (not represented) by the user 22, so as to configure a user authentication application supported by the phone 24 and a user authentication application supported by the chip 26.

Alternately, instead of the user 22, each user authentication application supported by the phone 24 and the chip 26 is previously configured by default.

To carry out such a configuration, the user 26 may define previously a number, as threshold T, of one or several invisible tattoos to be used as user authentication data to be matched. The number T represents a number, like e.g. three, of the whole invisible tattoos to be used as user authentication data to be matched.

Additionally or alternatively, the user 22 may define previously an order of one or several invisible tattoos to be used as user authentication data to be matched. The order represents an order, like e.g. the first, second and third invisible tattoo that are selected by the user 22 are the first, second and third reference tattoo respectively, to be used as user authentication data to be matched.

Additionally or alternatively, the user 22 may define previously a time period for selecting either each of at least one invisible tattoo or a set of at least one invisible tattoo to be used for being compared to user authentication data to be matched. Such a time period represents either a time period, like e.g. either 2 or 3 s to select each invisible tattoo to be part of the user authentication data to be matched or e.g. from 5 s to 10 s to select the whole set of invisible tattoos to be used as user authentication data to be matched.

Additionally or alternatively, the user 22 may define previously a total number of attempts that a user has to attempt to propose the right user authentication data to be matched.

It is assumed that one finger has been invisibly marked at several minutiae, so as to authenticate a user based on the invisible marks or tattoos. The minutiae are easily detectable and locatable further to the associated invisible tattoos that have been brought onto the considered fingerprint.

According to another embodiment (not represented), instead of a single finger, several fingers have been invisibly marked.

During an enrolment phase, firstly, the user 22 presents 28, through the phone MMI, his or her finger both on the fingerprint sensor and preferably without any physical contact to the invisible tattoo sensor.

The phone 24 detects 210 each invisible tattoo that is present on the fingerprint and preferably a location of each invisible tattoo on the concerned fingerprint. In other words, the phone 24 "reads", i.e. perceives, any "written" invisible tattoo that exists on the concerned fingerprint.

Then, the phone 24 displays 212 (or lets display) the detected invisible tattoos.

Such a display of the detected invisible tattoos uses preferably the phone touch screen.

The detected invisible tattoos are preferably highlighted for their display by using graphical data.

Once the detected invisible tattoos are displayed, the phone 24 initializes 214 a counter to zero.

The phone 24 may further display a message, like "please enter data" for requesting the phone user to enter data.

The user may start a selection of one or a plurality of displayed invisible tattoos that the user desires to be used as user authentication data.

The phone 24 increments 216 the counter by adding one unit to its previous value.

Then, during a counter verification step 218, the phone 24 analyzes whether the counter has or has not exceeded a threshold T, like e.g. three.

If the counter is less than or equal to the threshold T, then the phone 24 analyses 220 whether the user 22 has or has not selected one displayed invisible tattoo amongst all the displayed invisible tattoos by e.g. touching the phone touch screen at the concerned minutia.

As soon as the user 22 has selected one displayed invisible tattoo, the phone 24 may display a character, like e.g. a number, a letter or a symbol, such as a star, so as to indicate that the phone 24 has taken into account the selected invisible tattoo, as part of the user authentication data to be stored.

The phone 24 stores 222, at least temporary, preferably in a volatile phone memory, the selected invisible tattoo.

Then, the phone 24 carries out again the step 216 for incrementing the counter and the counter verification step 218.

As long as the counter does not exceed the threshold T, the phone 24 reiterates both the step 220 for getting data entered by the user 22 by a user selection of an invisible tattoo and the step 222 of storing the selected invisible tattoo.

Once the counter is greater than the threshold T, the phone 22 sends 224 to the chip 26, further to a user selection of the selected invisible tattoo, a set of one or several selected invisible tattoos that have been selected and stored temporary in a phone memory.

Once the chip 26 receives all the selected invisible tattoo(s), the chip 26 stores 226 the selected invisible tattoo(s), as user authentication to be matched.

The invention user authentication application allows enrolling a user by registering (preferably into the chip) one or several invisible tattoos that are selected by the user, as reference tattoo(s) and user authentication data to be matched.

The same user authentication method 20 may be also used for getting a proposed invisible tattoo(s), as proposed user authentication data, to be submitted to the chip 26, as the device that stores the user authentication data to be matched. Then, instead of storing 226 the selected invisible tattoos, the chip 26 verifies whether the proposed user authentication data does or does not match the user authentication data. And, only if the proposed user authentication data does match the user authentication data, then the chip 26 authenticates the user. Otherwise, i.e. if the proposed user authentication data does not match the user authentication data, the chip 26 fails to authenticate the user.

Once the invisible tattoos are registered as user authentication data to be matched, the user has to select and submit the registered invisible tattoos, so as to be strongly authenticated as the genuine user. As a matter of fact, the user may thus be identified and authenticated by using only her or his fingerprint(s), as her or his own physiological characteristics.

The invention user authentication application allows then authenticating, in a reliable manner, a phone user when submitting, preferably at the phone MMI, one or several invisible tattoos that are selected by the phone user, as proposed reference tattoo(s) and user authentication data to be matched.

The herein supra described user authentication method 20 is easy, convenient for a user, quick, seamless and secure to be implemented.

Due to the ownership of the registered user fingerprint minutiae, the user can easily acquire and remember her or his specific user authentication data.

The invention method for authenticating a user is flexible. As a matter of fact, it is possible to choose a number of marked minutiae to be selected according to security and processing time requirements, so as to be authenticated.

## Claims

1. A method (20) for authenticating a user (22),
**characterized in that,** the user having at least one fingerprint (10) that is marked, in an invisible manner, at at least one minutia, each marked minutia (12, 14, 16, 18 or 110) being an invisible tattoo, the method comprises, during an enrolment phase, the following steps:
- a first device determines (210) at least one invisible tattoo on at least one fingerprint;
- the first device displays (212) or lets display the at least one determined invisible tattoo;
- a user selects (220) at least one displayed invisible tattoo; and
- the first device or a second device coupled or connected to the first device, as storing device, stores (226) at least one selected invisible tattoo, each stored invisible tattoo being one reference tattoo, the at least one stored invisible tattoo being registered as user authentication data to be matched.

2. Method according to claim 1, wherein the method comprises a step in which the user defines previously a number of at least one invisible tattoo to be used as user authentication data to be matched.

3. Method according to claim 1 or 2, wherein the method comprises a step in which the user defines previously an order of at least one invisible tattoo to be used as user authentication data to be matched.

4. Method according to any of claims 1 to 3, wherein the method comprises a step in which the user defines previously a time period for selecting either each of at least one invisible tattoo or a set of at least one invisible tattoo to be used for being compared to user authentication data to be matched.

5. Method according to any of claims 1 to 4, wherein the method comprises, during an authentication phase, the following steps:
- the first device determines at least one invisible tattoo;
- the first device displays or lets display the at least one determined invisible tattoo;
- a user selects at least one displayed invisible tattoo, the at least one selected tattoo being proposed user authentication data;
- the first device sends to the storing device the proposed user authentication data;
- the storing device verifies whether the proposed user authentication data does or does not match the user authentication data;
- only if the proposed user authentication data does match the user authentication data, then the storing device authenticates the user.

6. Method according to any of claims 1 to 5, wherein the at least one minutia includes at least one element of a group comprising:
- a ridge ending;
- a ridge bifurcation;
- a ridge enclosure;
- an independent ridge;
- a core;
- a spur;
- a bridge;
- a delta;
- a ridge crossing;
- a double bifurcation;
- a trifurcation;
- opposed bifurcation;
- a dot.

7. Method according to any of claims 1 to 6, wherein each of the at least one determined invisible tattoo is represented by using graphical data.

8. Method according to claim 7, wherein the graphical data includes at least one element of a group comprising:
- a circle;
- a triangle;
- a square;
- an hexagon;
- a diamond.

9. A first device (24) for authenticating a user (22),
**characterized in that,** the user having at least one fingerprint (10) that is marked, in an invisible manner, at at least one minutia, each marked minutia (12, 14, 16, 18 or 110) being an invisible tattoo, the first device is configured, for an enrolment phase,:
- to determine (210) at least one invisible tattoo on at least one fingerprint;
- to display (212) or let display the at least one determined invisible tattoo; and
- to store (222), further to a user selection of at least one displayed invisible tattoo, at least one selected invisible tattoo, each stored invisible tattoo being one reference tattoo, the at least one stored invisible tattoo being registered as user authentication data to be matched.

10. A system for authenticating a user (22),
**characterized in that,** the system comprising a first device (24) and a second device (26), the second device being coupled or connected to the first device, the user having at least one fingerprint (10) that is marked, in an invisible manner, at at least one minutia, each marked minutia (12, 14, 16, 18 or 110) being an invisible tattoo, the first device (24) is configured, for an enrolment phase,:
- to determine (210) at least one invisible tattoo on at least one fingerprint;
- to display (212) or let display the at least one determined invisible tattoo;
- to send (224) to the second device, further to a user selection of at least one displayed invisible tattoo, at least one selected invisible tattoo; and
**in that** the second device (26) is configured, for an enrolment phase,:
- to receive from the first device, the at least one selected invisible tattoo; and
- to store (226) at least one selected invisible tattoo, each stored invisible tattoo being one reference tattoo, the at least one stored invisible tattoo being registered as user authentication data to be matched.
